# EUROPEAN PATENT APPLICATION

(11) **EP 4 768 904 A2**
(43) Date of publication of application: **01.07.2026**
(21) Application number: 26154747.5
(22) Date of filing: 06.05.2021
(51) Int. Cl.: G01N 27/9013

(54) **CAN BODYMAKER MONITORING**

(30) Priority: 15.05.2020 GB 202007230
(62) Divisional of application: 21725462.2
(71) Applicant: Crown Packaging Technology, Inc., Tinley Park, IL 60487-9286 (US)
(72) Inventor: Halstead, Michael, Oxfordshire, OX12 9BP (GB); Bailey, Damien Andrew, Oxfordshire, OX12 9BP (GB); Egerton, Daniel, Oxfordshire, OX12 9BP (GB)
(74) Representative: Marks & Clerk LLP

(57) **Abstract**

A can bodymaker for producing can bodies from cups. The can bodymaker comprises a ram configured to reciprocate along an axis, a punch mounted on the ram; a tool pack comprising a cradle and a plurality of tools located in the cradle for drawing and ironing a cup mounted on the punch during a forward stroke of the ram. The can bodymaker further comprises a bolster plate fixed to the can bodymaker, an adapter plate fixed to the bolster plate and a stripper assembly fixed to the adapter plate for removing a can body from the punch during a return stroke of the ram and clamping mechanism for biasing the tools against a front face of the adapter plate. The can bodymaker further comprises one or more load cells located in or on the adapter plate and configured to generate an output signal or signals indicative of an axial force exerted on the tools by the cup passing therethrough.

## Description

### Technical Field

The present invention relates to the monitoring of can bodymakers. In particular, it relates to an apparatus and method for monitoring the forces acting on components in a tool pack of a can bodymaker when the can bodymaker is operated.

### Background

In known can bodymakers for the production of thin-walled metal two-piece can bodies by a "drawing and wall-ironing" (DWI) process, metal cups are fed to the bodymaker and carried by a punch on the end of a ram through a series of dies to produce a can body of the desired size and thickness. The series of dies may include a redraw die for reducing the diameter of the cup and lengthening its sidewall, and one or more ironing dies for wall-ironing the cup into a can body. The area or cradle of the bodymaker frame within which the dies are located is known as the "toolpack". The can body carried on the punch may ultimately contact a bottom forming tool or "domer" so as to form a shape such as a dome on the base of the can. An exemplary bodymaker is described in WO9934942.

Can bodymakers are typically operated for extended periods at high speed to produce more than around 300 to 400 can bodies per minute. However, the quality of the can bodies that are produced can vary significantly over time because of changes in, for example: the alignment of the machine components, coolant temperature and flow rate, lubrication of the machine, and/or the quality of the incoming cups (e.g. because of variations in the quality of the metal coil from which the cups are made).

During the DWI process, the metal is subject to loads as the punch forces it through the ironing dies. However, the magnitude and distribution of these loads changes both during the stroke, and from stroke to stroke, leading to variations in the quality of the can bodies produced. For example, frictional forces and general wear will cause the alignment of the ram to vary slightly over time. In addition, a high speed reciprocating ram is generally subject to at least some vibration, due to the impact of the ram on the can body and to the variable "droop" of the ram as it moves from and to its fully-extended position.

As a further example, when the ram carries the can body into contact with the domer, any misalignment can lead to the can body end splitting, particularly if the can body is made from aluminium. If the misalignment is slight, the split (sometimes known as a "smile") may not be immediately visible to the naked eye, and the split may lead to the can bursting once the can body has been filled. This may not occur until the filled can has been purchased.

Poor quality can bodies may lead to wastage and downtime in can production. This may occur, for example, either because the bodymaker itself must be re-aligned or repaired or because other machines further down the production line are adversely affected by the poor quality cans being produced. Unfortunately, the high speed, high volume nature of the can production industry means that lost production time can be very costly for producers.

Traditionally, alignment and re-alignment of bodymakers is a complex and time-consuming process that needs to be carried out laboriously by skilled operators (who are often in short supply) only after serious problems have developed. When setting up a can bodymaker, the ram and its drive components are typically fixed in place on the bodymaker frame. This aligns the axis of the ram with the main axis of the bodymaker. The other components, including for example the redraw and ironing dies and domer, are then aligned with the ram.

### Summary

According to a first aspect of the present invention there is provided a can bodymaker for producing can bodies from cups. The can bodymaker comprises a ram configured to reciprocate along an axis, a punch mounted on the ram; a tool pack comprising a cradle and a plurality of tools located in the cradle for drawing and ironing a cup mounted on the punch during a forward stroke of the ram. The can bodymaker further comprises a bolster plate fixed to the can bodymaker, an adapter plate fixed to the bolster plate and a stripper assembly fixed to the adapter plate for removing a can body from the punch during a return stroke of the ram and clamping mechanism for biasing the tools against a front face of the adapter plate. The can bodymaker further comprises one or more load cells located in or on the adapter plate and configured to generate an output signal or signals indicative of an axial force exerted on the tools by the cup passing therethrough.

The term "axial force" means a force having a component directed along the axis along which the ram reciprocates.

The can bodymaker may comprise an encoder configured to provide a measurement of the position of the ram at one or more times during each reciprocation. The encoder may be a linear encoder. Alternatively, the encoder may be a rotary encoder configured to be turned by a shaft used to drive the ram.

The one or more the load cells may be piezoelectric load cells.

The one or more load cells may comprise more than one load cell, the load cells being angularly spaced apart from one another equally about the axis.

The can bodymaker may comprise a processor configured to adjust one or more operating parameters of the bodymaker, such as a rate of reciprocation of the ram, in response to the output signal(s).

The adapter plate may be fixed to the bolster plate by one or more preloading bolts, each preloading bolt passing through a respective one of the load cells to secure the load cell between the adapter plate and the bolster plate,

The stripper assembly may comprise a radial offset monitor for detecting misalignment of the ram and/or punch relative to the axis.

The radial offset monitor may comprise a bore configured to allow passage of the punch and ram therethrough and one or more eddy current sensors spaced around the bore.

According to a second aspect of the present invention there is provided an apparatus for retro-fitting to a can bodymaker. The can bodymaker comprises: a ram configured to reciprocate along an axis; a punch mounted on the ram; a tool pack comprising a cradle and a plurality of tools located in the cradle for drawing and ironing a cup mounted on the punch during a forward stroke of the ram; a bolster plate fixed to the can bodymaker; an adapter plate fixed to the bolster plate; a stripper assembly for removing a can body from the punch during a return stroke of the ram; and a clamping mechanism for biasing said tools against a front face of the adapter plate. The apparatus comprises: a replacement adapter plate for fixing to the bolster plate in place of the adapter plate of the can bodymaker; and one or more load cells located in or on the replacement adapter plate and configurable to generate an output signal or signals indicative of an axial force exerted on the tools by the cup passing therethrough.

The replacement adapter plate may include a stripper assembly comprising a radial offset monitor for detecting misalignment of the ram and/or punch relative to the axis. The radial offset monitor may comprise a bore configured to allow passage of the punch and ram therethrough and one or more eddy current sensors spaced around the bore.

According to a third aspect of the present invention there is provided a method of calibrating the apparatus the second aspect after it has been retro-fitted to a can bodymaker. The method comprises installing into the cradle of the can bodymaker, a calibration fixture comprising one or more reference load cells configured to generate an output signal or signals indicative of an axial force exerted on the tools located in the cradle. An axial force is applied to the tools and one or more reference load cells using the clamping mechanism of the can bodymaker. The respective output signal or signals of the reference load cell(s) are used to determine a calibration factor or calibration function for estimating the force on the tool(s) from the output signals generated by the load cell(s) of the apparatus.

According to a fourth aspect of the present invention there is provided a method of operating a can bodymaker to mitigate the effects of tool wear, damage and/or misalignment during production of can bodies. Each can body is formed by pushing a cup mounted on a punch of a ram reciprocating along an axis through tools contained within a cradle of a tool pack of the can bodymaker. The method comprises obtaining, from one or more load cells, output signals indicative of an axial force exerted on the tools by the cup passing therethrough, the load cell(s) being located in or on an adapter plate attached to a bolster plate fixed to the can bodymaker. The output signals are processed to obtain data indicative of one or more of the tools being worn, damaged, and/or misaligned with respect to the ram. One or more operating parameters of the can bodymaker, or of another component of a production line within which the bodymaker is located, are adjusted based on said data to mitigate the effects of the one or more tools being worn, damaged, and/or misaligned with respect to the ram.

The one or more operating parameters may comprise one or more of:
a rate of can production;
an operating temperature of the tool pack;
a rate or temperature at which coolant is supplied to the tool pack;
a rate at which lubricant is supplied to the tool pack; and
a domer position with respect to the ram axis.

The one or more operating parameters may comprise a parameter of a component of the production line upstream or downstream of the bodymaker, for example a cup press.

The method may comprise removing the can body from the punch during a return stroke of the ram using a stripper fixed to the adapter plate.

The stripper may be provided in a stripper assembly comprising a radial offset monitor, and the method further comprises obtaining output signals indicative of a position of the ram and/or punch perpendicular to the axis using the radial offset monitor and adjusting said one or more operating parameters based on the data and the output signals obtained from the radial offset monitor.

### Brief Description of the Drawings

Figure 1 illustrates schematically a perspective view of a can bodymaker;
Figure 2 is a schematic cross-sectional perspective view of a tool pack of the can bodymaker of Figure 1;
Figure 3 is another schematic cross sectional perspective view of the can bodymaker of Figure 1;
Figure 4 is a schematic perspective rear view of an adapter plate and stripper assembly;
Figure 5 is a schematic cross sectional side view of the adapter plater and stripper assembly of Figure 4;
Figure 6 is a schematic perspective front view of the adapter plater and stripper assembly of Figure 4;
Figure 7 is a schematic cross section side view of a load cell installed between the adapter plate and a bolster plate of the tool pack; and
Figure 8 is a flow diagram of a method of operating a can bodymaker to mitigate the effects of tool wear, damage and/or misalignment during production of can bodies.

### Detailed Description

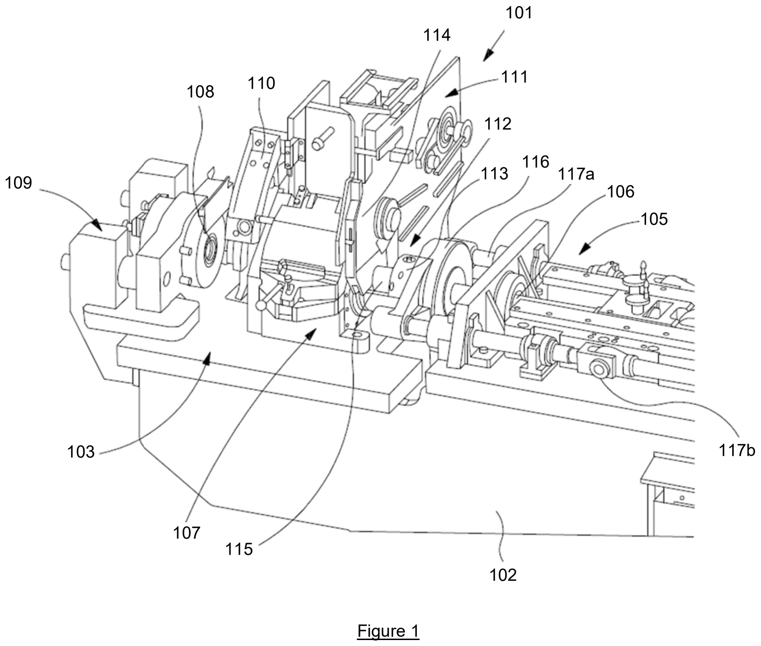

Figure 1 is a perspective schematic view of a modular bodymaker 101 for making can bodies from cups drawn from sheet metal. The bodymaker 101 comprises a base 102 which supports a machine bed 103 with a datum surface and a ram assembly 105. The ram assembly 105 comprises a reciprocating ram 106 with a punch (not shown) mounted on one end. During a forward stroke of the bodymaker 101, the punch contacts a cup (not shown) held in the path of the ram within a tool pack 107 located on the datum surface. The punch pushes the cup through a redraw die (not shown) contained within the tool pack 107 to form an elongated can body. The can body is carried on the punch to contact a bottom forming tool 108 housed by a domer module 109 so as to form a shape such as dome on the base of the can. On a return stroke of the bodymaker 101, the can body is removed from the punch by a stripper (not shown) of the tool pack 107. The can body is transported away from the ram axis by a can discharge turret 110 of an infeed-discharge module 111 located between the tool pack 107 and the domer module 109.

The tool pack 107 also comprises a redraw sleeve module 112, located in front of the redraw die (not shown) for positioning the cup during the redraw process. The redraw sleeve module 212 comprises a bearing 113 with a cup locator (not shown) to receive a cup from an infeed mechanism 114 of the infeed-discharge module 111. The bearing 113 supports a reciprocating redraw sleeve 115 that is aligned coaxially with the ram and has a central bore that allows the punch to pass therethrough. A rear end of the redraw sleeve 115 is coupled to a redraw carriage 116 that is driven in a reciprocating motion by a pair of push rods 117a, 117b located on opposite sides of the ram 106. Prior to the punch contacting the can, the redraw sleeve 115 enters the open end of the cup and forces the cup into contact with the redraw die. The redraw sleeve 115 holds the cup firmly in place against the redraw die as the punch pushes the cup through an aperture of the redraw die that is of smaller diameter than the cup. As the cup is drawn through the redraw die by the punch it reduces in diameter and its sidewall lengthens. The tool pack 107 may also contain one or more ironing dies or other tooling for forming the can body after the redraw die. The punch then carries the elongated cup away from the redraw sleeve module and through the remaining ironing dies and tooling.

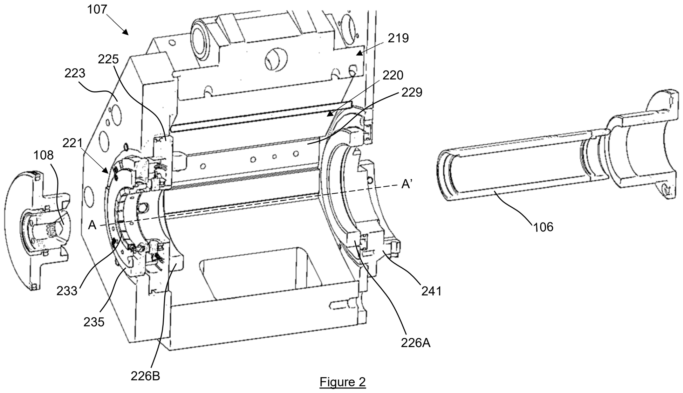

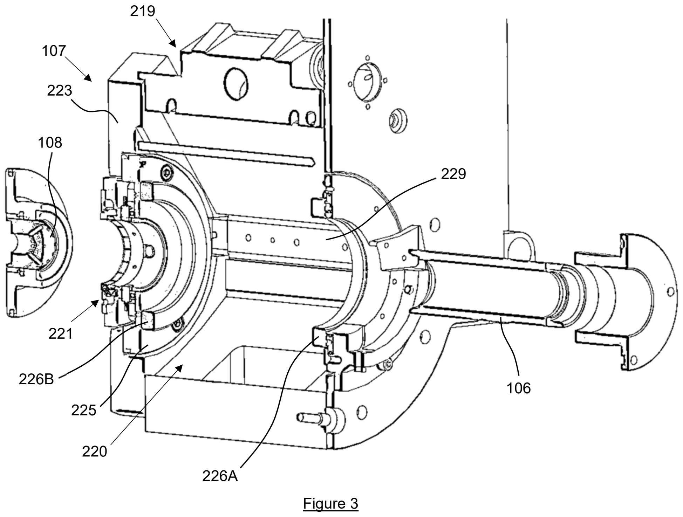

Figures 2 and 3 are sectional perspective views of the tool pack 107, which comprises a housing 219, within which a cradle 220 is provided, and a stripper assembly 221 attached to a bolster plate 223 by an adapter plate 225, the bolster plate 223 being attached to the housing 219 and providing a rear wall of the tool pack 107. The axis along which the punch (not shown) travels is shown in Figure 2 by the broken line A-A'. The cradle 220 has a cylindrical inner surface and wear bars 229 that are used to support the ironing dies (not shown) and spacer rings (226A, B) inside the housing 219. The redraw die (not shown) is mounted to the front face of the housing 219 and forms an entrance to the housing 219 into which the punch moves on the forward stroke of the ram (106).

The stripper assembly 221 comprises a stripper 233 mounted within a stripper housing 235 that is attached to the adapter plate 225. The stripper 233 comprises stripping fingers that extend radially inwards, i.e. towards the axis A-A'. On the forward stroke of the ram 106, the can body carried on the punch deflects the stripping fingers as it moves through the stripper 233. On the return stroke, i.e. away from the bottom forming tool 108, the stripping fingers prevent the can body from returning with the punch and the can body is stripped from the punch and then removed from the bodymaker 201 by the can discharge turret 210. In other embodiments not shown here, the can body may be removed from the bodymaker 201 by pressurised air (alternatively, pressurised air may be used to assist removal of the can body by a stripper).

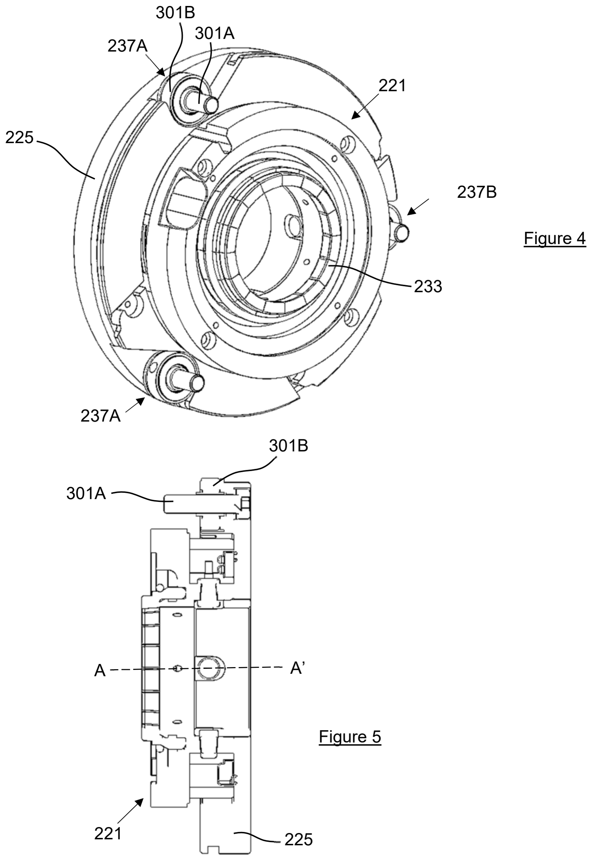

The adapter plate 225 is located between the bolster plate 223 and the toolpack housing 219. The adapter plate 225 comprises three load cells 237A-C ( see Figures 4 to 6) equally spaced around the axis A-A' and each having an axis oriented along the axis A-A' towards the cradle 220 in order to measure forces generated by passage of the punch through the dies. In this example, the load cells 237A-C are piezoelectric load cells that each generates an electrical signal when compressed along its axis (the axis preferably being aligned parallel to the axis A-A').

Figure 4 shows the rear face of the adapter plate 225 with the bolster plate 223 (and the rest of the toolpack 107) removed so that each of the three load cells 237A-C is visible.

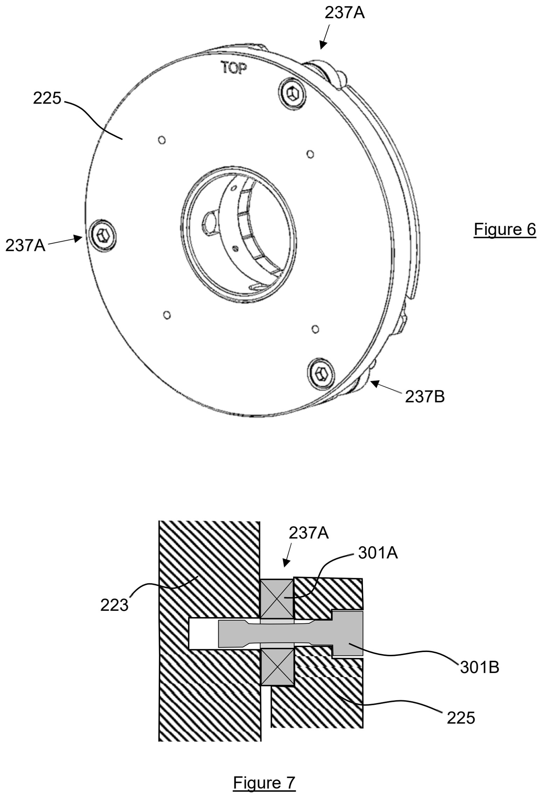

The annular body 301B of each load cell 273A-C is located in a recess formed in the edge and rear face of the adapter plate 225 (i.e. the face of the adapter plate 225 furthest from tool pack cradle 220). In this example, each recess is shaped to accommodate a wired connection to the side of the annular body 301B. The load cell 237A also comprises a preloading bolt 301B that passes through the adapter plate 225, through the centre of the annular body 301 and into the bolster plate 223. The cylindrical body 301A protrudes from the recess so that it contacts the bolster plate 223 across a small gap between the adapter plate 225 and the bolster plate 223 (see Figure 7). The preloading bolt 301B is used to bias the adapter plate 225 towards the bolster plate 223 so that the annular body 301A is held in compression between them. Application of a force to the adapter plate 225 in the direction of the bolster plate 223 causes the annular body 301A to be compressed further (i.e. the pre-loading 301B does not prevent the adapter plate 225 from moving towards the bolster plate 225).

Figure 5 shows a vertical cross section through the adapter plate 225 and stripper assembly 221 along the axis A-A'.

Figure 6 shows a perspective view of the front face of the adapter plate 225 (i.e. the face closest to the toolpack cradle 220).

Figure 7 shows the adapter plate 225 bolted to the bolster plate 223 using the pre-loading bolt 301B, which passes through the cylindrical body 301A of the load cell 237A. The cylindrical body 301A in held compression between the rear face of the adapter plate 225 and the front face of the bolster plate 223.

In the particular embodiment shown in Figures 4 to 7, the stripper housing 235 comprises four eddy current sensors 401A,B (although 1 or more than 4 eddy current sensors can be used) spaced around the central bore through which the ram moves, for monitoring the radial offset of the punch/ram. Radial offset data from the eddy current sensors can be correlated with the force data obtained from the load cells 237A-C. This correlation helps identify the cause of radial misalignments between the ram/punch and the toolpack components. For example, an anomalously large force arising from passage of the punch through one of the dies may be caused by the ram/punch becoming misaligned or from the die itself being misaligned; these two possibilities can be distinguished from one another using the radial offset data.

Returning to Figures 2 and 3, as the punch travels through the cradle 220 (i.e. from left to right in Figure 2), the can body is pushed through the redraw die and ironing dies, which creates a longitudinal force that is transmitted through the dies and spacer rings to the load cells 237A-C. The time-varying signals produced by the load cells 237A-C therefore provide measurements of the longitudinal forces acting on the dies as the sidewalls of the can body are being drawn and/or ironed.

The load cells 237A-C may be provided about the axis A-A' in an equiangular arrangement to provide optimal sensitivity. A minimum of three load cells 237A-C is preferred to provide sufficient spatial detail and the maximum number of load cells 237A-C is limited only by cost and the space available within the adapter plate 225. Other types of load cells 237A-C, such as capacitive load cells, can also be used instead of or in addition to piezoelectric load cells.

The adapter plate 225 may be retrofitted to existing can bodymakers without modification to the toolpack, e.g. by replacing an existing adapter plate.

As the load cells 237A-C are located outside of the cradle 220, force measurements can be made without requiring any reconfiguration or replacement of the components (tools) in the cradle 220. For example, although a fixture with the load cells 237A-C could in principle be installed in place of one of the spacer rings, this would require that the fixture to be manufactured to a high tolerance and multiple versions of the fixture may be needed depending on which dies are included in the toolpack. Such an arrangement may also adversely affect the cooling provided to the dies. Including the load cells 237A-C inside the cradle 220 may also be problematic because installing and removing components from the cradle 220 may be liable to damage the load cells 237A-C.

Although force measurements can be made with a single load cell 237A it is preferable to have more than one transducer in order to obtain information about how the forces acting on the dies are distributed spatially. For example, multiple load cells 237A-C may be used to determine that the relative alignment between the ram/punch and one or more of the dies needs correcting, e.g. using an iterative procedure in which the forces measured by each of the load cells 237A-C are compared and the alignment of the ram and/or dies varied until the forces are balanced, and/or until each of the measured forces is minimised. In practice, this procedure can be carried out by using a computer device (not shown) comprising an analogue to digital (ADC) converter to process the time-varying electrical signals generated by the load cells 237A-C and to generate a graphical display or readout of the forces that can be viewed by an operator who is making the necessary adjustments.

In some case, the computer device can be configured to detect when the forces exceed a threshold and/or whether there is an imbalance in the measured forces (e.g. one of the measured forces is greater than the others) exceeding a threshold, and respond by generating a visual or audible alarm and/or halting operation of the can bodymaker 201. The computer device may also control one or more operating parameters of the can bodymaker 101 to ensure that it operates safely and efficiently. For example, the computer device may reduce the repetition rate of the can bodymaker 101 once a problem has begun to develop.

The time-varying measurements obtained from the load cells 237A-C can be logged (e.g. stored in a database) so that gradual changes in the alignment caused by wear and vibrations can be monitored. The time resolution provided by the ADC is sufficient to resolve the temporal variation of the forces measured in the course of a single stroke. This data may be correlated with longitudinal position data for the ram over the course of each stroke (i.e. data indicative of the rams motion along the axis A-A'). This data may be obtained, for example, from a high-resolution rotary encoder that is turned by the shaft used to drive the reciprocating ram, or from a high-resolution rotary encoder that measures the longitudinal position of the ram more directly. Correlating the force measurements with the position data allows particular features in the force measurements to be attributed to passage of the ram through particular components of the toolpack, allowing e.g. a particular die to be identified as poorly aligned or damaged, or for the wear on each of the dies to be estimated from the total force on each die integrated over a large number of strokes. This analysis may be performed automatically by the computer device, which may generate a warning signal or alert indicating that one or more of the dies needs re-aligning or replacing. The stroke number may also be recorded so that the measured force data can be associated with a particular can or cans produced by the bodymaker 201, e.g. so that particular cans or batches of cans can be certified as likely to be free of defects or otherwise prevented from being shipped to customers.

It is not essential for the load cells 237A-C to be calibrated because useful information can still be obtained from the relative forces measured by each of the load cells 237A-C (e.g. to detect changes in the relative alignment of the components over time). Nevertheless, calibration of the load cells 237A-C may allow more accurate models of the forces acting on the dies to be constructed, thereby allowing more sophisticated processing of the measurements to be performed and potential problems to be detected earlier. Calibration refers here to the conversion from the electrical signal produced by the load cells 237A-C and the actual longitudinal forces acting on the toolpack components. This may involve determining a mathematical conversion function that takes the electrical signal(s) as an input and provides corresponding force(s) as an output. In some cases, this function may consist of a multiplicative factor used to scale the electrical signal by an amount. Calibration is, in general, needed for accurate measurements because the proportion of the force transmitted to the load cells 237A-C will vary according to how the adapter plate 225 is mounted and/or because the transmission of the forces from the dies may vary according to how the toolpack is configured, e.g. what "pre-load" is applied to the toolpack (see below).

To calibrate the load cells 237A-C, a fixture comprising one or more reference load cells (not shown) may be installed into the cradle 220 (e.g. in place of one of the spacer rings or ironing dies). A load is then applied to the reference load cell(s) along the axis A-A' and the electrical signals produced by the load cells 237A-C and the reference load cell(s) measured. The conversion function is then determined from the measured signals, e.g. by fitting a polynomial or spline interpolation function to the reference signals plotted against the load cell signals. The load applied to the reference load cell(s) and the load cell(s) 237A-C may be generated by the toolpack clamp 241 (see Figure 2), which provides a compressive load between the adapter plate 225 and a front wall 239 of the housing 219. A proportion of this load (referred to as a "pre-load") is applied when the bodymaker 101 is operated in order to secure the toolpack components firmly in place. Calibration of the load cells 237A-C may therefore be used to account for (i.e. compensate for) variances in the pre-load between can bodymakers. Calibration of the load cells 237A-C also allows the proportion of the longitudinal load that bypasses the load cells 237A-C through the preloading bolt 301B to be compensated.

The force measurements obtained from the load cells 237A-C during can production can be analysed using machine learning, analytics and/or artificial intelligence techniques to determine how the operation of the can bodymaker can be improved, e.g. by adjusting one or more operating parameters of the can bodymaker. For example, an evolutionary algorithm (or another type of optimisation algorithm) can be used to vary operating parameters of the can bodymaker according to a fitness metric based on the measured forces, e.g. a fitness metric that penalises the measured forces exceeding a pre-defined threshold and/or the forces measured by the load cells 237A-C differing from one another by a predefined threshold or relative proportion.

The operating parameters for the can bodymaker that are provided to the algorithm may include one or more of: the rate of can production (set speed of the can bodymaker), the operating temperature of the toolpack, the rate at which coolant is supplied to the toolpack, the rate at which lubricant is supplied to the toolpack, and the domer position (alignment) with respect to the ram axis. The algorithm may also take as an input other types of data, such as the time elapsed since the can bodymaker was last serviced or reconfigured, the number of cans produced using the current set of dies, and/or a measurement of the quality of the feedstock, such as the thickness or weight of the cups supplied to the bodymaker.

Feedback control can also be used to adjust one or more of the can bodymaker operating parameters in order to compensate for changes to the can bodymaker over time caused by wear or movement of the components in the can bodymaker. For example, a proportional-integral-derivative (PID) controller can be used to vary one or more of the can bodymaker operating parameters to minimise an error signal determined from the measured forces.

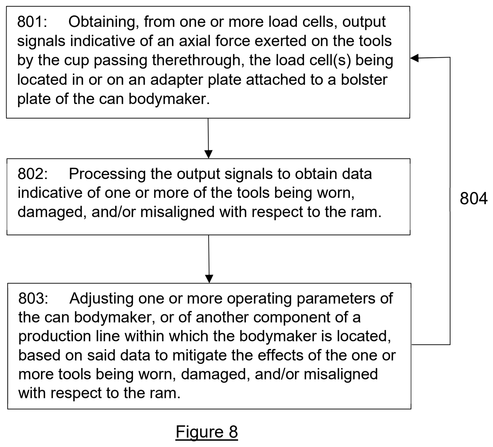

Figure 8 shows steps involved in a method of operating a can bodymaker to mitigate the effects of tool wear, damage and/or misalignment during production of can bodies, e.g. using a can bodymaker as described above. The first step 801 comprises obtaining, from one or more load cells 237A-C, output signals indicative of an axial force exerted on the tools by the cup passing therethrough, the load cell(s) being located in or on an adapter plate 225 attached to a bolster plate 223 of the can bodymaker. The output signals are then processed 802 to obtain data indicative of one or more of the tools being worn, damaged, and/or misaligned with respect to the ram 106. This may involve, for example, determining that the force exerted on the tools by the cup exceeds a threshold or that the difference or ratio of output signals obtained from two or more of the load cells differ exceeds a predetermined threshold. One or more operating parameters of the can bodymaker, or of another component of a production line within which the bodymaker is located, are adjusted 803 based on said data to mitigate the effects of the one or more tools being worn, damaged, and/or misaligned with respect to the ram 106. This process may be repeated iteratively 804 in a feedback loop, as described above.

It will be appreciated by the person of skill in the art that various modifications may be made to the above described embodiments without departing from the scope of the invention.

Innovative aspects of the present disclosure are also set out in the following numbered clauses.

Clause 1. A can bodymaker for producing can bodies from cups and comprising:
a ram configured to reciprocate along an axis;
a punch mounted on the ram;
a tool pack comprising a cradle and a plurality of tools located in the cradle for drawing and ironing a cup mounted on the punch during a forward stroke of the ram;
a bolster plate fixed to the can bodymaker;
an adapter plate fixed to the bolster plate;
a stripper assembly fixed to the adapter plate for removing a can body from the punch during a return stroke of the ram;
a clamping mechanism for biasing said tools against a front face of the adapter plate; and
one or more load cells located in or on the adapter plate and configured to generate an output signal or signals indicative of an axial force exerted on the tools by the cup passing therethrough.

Clause 2. A can bodymaker according to clause 1 and comprising an encoder configured to provide a measurement of the position of the ram at one or more times during each reciprocation.

Clause 3. A can bodymaker according to clause 2, wherein the encoder is a linear encoder.

Clause 4. A can bodymaker according to clause 2, wherein the encoder is a rotary encoder configured to be turned by a shaft used to drive the ram.

Clause 5. A can bodymaker according to any one of the preceding clauses, wherein the one or more the load cells are piezoelectric load cells.

Clause 6. A can bodymaker according to according to any one of the preceding clauses, wherein the one or more load cells comprise more than one load cell, the load cells being angularly spaced apart from one another equally about the axis.

Clause 7. A can bodymaker according to any one of the preceding clauses and comprising a processor configured to adjust one or more operating parameters of the bodymaker, such as a rate of reciprocation of the ram, in response to the output signal(s).

Clause 8. A can bodymaker according to any of the preceding clauses, wherein the adapter plate is fixed to the bolster plate by one or more preloading bolts, each preloading bolt passing through a respective one of the load cells to secure the load cell between the adapter plate and the bolster plate,

Clause 9. A can bodymaker according to any one of the preceding clauses, wherein the stripper assembly comprises a radial offset monitor for detecting misalignment of the ram and/or punch relative to the axis.

Clause 10. A can bodymaker according to clause 9, wherein the radial offset monitor comprises a bore configured to allow passage of the punch and ram therethrough and one or more eddy current sensors spaced around the bore.

Clause 11. Apparatus for retro-fitting to a can bodymaker, the can bodymaker comprising:
a ram configured to reciprocate along an axis;
a punch mounted on the ram;
a tool pack comprising a cradle and a plurality of tools located in the cradle for drawing and ironing a cup mounted on the punch during a forward stroke of the ram;
a bolster plate fixed to the can bodymaker;
an adapter plate fixed to the bolster plate;
a stripper assembly for removing a can body from the punch during a return stroke of the ram; and
a clamping mechanism for biasing said tools against a front face of the adapter plate; and
the apparatus comprising:
a replacement adapter plate for fixing to the bolster plate in place of the adapter plate of the can bodymaker; and
one or more load cells located in or on the replacement adapter plate and configurable to generate an output signal or signals indicative of an axial force exerted on the tools by the cup passing therethrough.

Clause 12. An apparatus according to clause 11, wherein the replacement adapter plate includes a stripper assembly comprising a radial offset monitor for detecting misalignment of the ram and/or punch relative to the axis.

Clause 13. A can bodymaker according to clause 12, wherein the radial offset monitor comprises a bore configured to allow passage of the punch and ram therethrough and one or more eddy current sensors spaced around the bore.

Clause 14. A method of calibrating the apparatus of any one of clauses 11 to 13 after it has been retro-fitted to a can bodymaker, the method comprising:
installing into the cradle of the can bodymaker, a calibration fixture comprising one or more reference load cells configured to generate an output signal or signals indicative of an axial force exerted on the tools located in the cradle;
applying an axial force to the tools and one or more reference load cells using the clamping mechanism of the can bodymaker; and
using the respective output signal or signals of the reference load cell(s) to determine a calibration factor or calibration function for estimating the force on the tool(s) from the output signals generated by the load cell(s) of the apparatus.

Clause 15. A method of operating a can bodymaker to mitigate the effects of tool wear, damage and/or misalignment during production of can bodies, each can body being formed by pushing a cup mounted on a punch of a ram reciprocating along an axis through tools contained within a cradle of a tool pack of the can bodymaker, the method comprising:
obtaining, from one or more load cells, output signals indicative of an axial force exerted on the tools by the cup passing therethrough, the load cell(s) being located in or on an adapter plate attached to a bolster plate fixed to the can bodymaker;
processing the output signals to obtain data indicative of one or more of the tools being worn, damaged, and/or misaligned with respect to the ram;
adjusting one or more operating parameters of the can bodymaker, or of another component of a production line within which the bodymaker is located, based on said data to mitigate the effects of the one or more tools being worn, damaged, and/or misaligned with respect to the ram.

Clause 16. A method according to clause 15, wherein the one or more operating parameters comprise one or more of:
a rate of can production;
an operating temperature of the tool pack;
a rate or temperature at which coolant is supplied to the tool pack;
a rate at which lubricant is supplied to the tool pack; and
a domer position with respect to the ram axis.

Clause 17. A method according to clause 15 or 16, wherein the one or more operating parameters comprise a parameter of a component of the production line upstream or downstream of the bodymaker, for example a cup press.

Clause 18. A method according to any one of clauses 15 to 17 and comprising removing the can body from the punch during a return stroke of the ram using a stripper fixed to the adapter plate.

Clause 19. A method according to clause 18, wherein the stripper is provided in a stripper assembly comprising a radial offset monitor, and the method further comprises obtaining output signals indicative of a position of the ram and/or punch perpendicular to the axis using the radial offset monitor and adjusting said one or more operating parameters based on the data and the output signals obtained from the radial offset monitor.

## Claims

1. Apparatus for retro-fitting to a can bodymaker, the can bodymaker comprising:
a ram configured to reciprocate along an axis;
a punch mounted on the ram;
a tool pack comprising a cradle and a plurality of tools located in the cradle for drawing and ironing a cup mounted on the punch during a forward stroke of the ram;
a bolster plate fixed to the can bodymaker;
an adapter plate fixed to the bolster plate;
a stripper assembly for removing a can body from the punch during a return stroke of the ram; and
a clamping mechanism for biasing said tools against a front face of the adapter plate; and
the apparatus comprising:
a replacement adapter plate for fixing to the bolster plate in place of the adapter plate of the can bodymaker; and
one or more load cells located in or on the replacement adapter plate and configurable to generate an output signal or signals indicative of an axial force exerted on the tools by the cup passing therethrough.

2. The apparatus according to claim 1, wherein the replacement adapter plate includes a stripper assembly for removing a can body from the punch during a return stroke of the ram.

3. The apparatus according to claim 2, wherein the stripper assembly comprises a radial offset monitor for detecting misalignment of the ram and/or punch relative to the axis.

4. A can bodymaker according to claim 3, wherein the radial offset monitor comprises a bore configured to allow passage of the punch and ram therethrough and one or more eddy current sensors spaced around the bore.

5. A method of calibrating the apparatus of any one of claims 1 to 4 after it has been retro-fitted to a can bodymaker, the method comprising:
installing into the cradle of the can bodymaker, a calibration fixture comprising one or more reference load cells configured to generate an output signal or signals indicative of an axial force exerted on the tools located in the cradle;
applying an axial force to the tools and one or more reference load cells using the clamping mechanism of the can bodymaker; and
using the respective output signal or signals of the reference load cell(s) to determine a calibration factor or calibration function for estimating the force on the tool(s) from the output signals generated by the load cell(s) of the apparatus.
